# EUROPEAN PATENT SPECIFICATION

(11) **EP 1 515 925 B1**
(45) Date of publication and mention of the grant of the patent: **07.05.2008**
(21) Application number: 03760984.9
(22) Date of filing: 18.06.2003
(51) Int. Cl.: F27B 7/02, F27B 7/36

(54) **ROTARY FURNACE FOR MANUFACTURING LIGHT BUILDING AGGREGATE**
DREHROHROFEN ZUR HERSTELLUNG EINES LEICHTZUSCHLAGES
FOUR ROTATIF PERMETTANT DE FABRIQUER UN AGREGAT DE CONSTRUCTION LEGER

(30) Priority: 21.06.2002 PL 35467302
(43) Date of publication of application: 23.03.2005
(73) Proprietor: Sokolowski, Janusz, 01-911 Warszawa (PL)
(72) Inventor: Luczaj Krzysztof, 17 15-889 Bialystok (PL); Sokolowski,Janusz, 01-911 Warszawa (PL)
(74) Representative: Wroblewski, Zygmunt
(86) International application number: PCT/PL2003/000056
(87) International publication number: WO 2004/000751

(56) References cited:
- FR-A- 782 674
- US-A- 2 505 249
- US-A- 3 037 940
- US-A- 4 038 025
- US-A- 5 927 969
- US-B1- 6 309 211
- WAINWRIGHT P J ET AL: "Synthetic aggregates from combustion ashes using an innovative rotary kiln" WASTE MANAGEMENT, ELSEVIER, NEW YORK, NY, US, vol. 21, no. 3, June 2001 (2001-06), pages 241-246, XP004226308 ISSN: 0956-053X

## Description

This invention relates to a rotary furnace for firing and sintering light aggregate, having the minimal energy consumption.

Light granulated aggregate obtained as a product of utilization of waste materials from power stations is used in building and highway engineering as a filler for construction concretes having a specific gravity and a thermal conductivity both lower than any traditionally used building aggregate.

The utilization and using dusts obtained from combusting coal in power stations is presented by many science and patent publications, application works on the laboratory and half-industry scale.

A shaft furnace especially suitable for after-burning ashes having a greater coal contents, more than 7%, has been disclosed in the Polish patent application P-345304 filed by UT "Unimasz" Sp z o.o., Bialystok, Poland.

However, serious difficulties occur in shaft furnaces to obtain proper charge movements in the shaft and to achieve a uniform air flow throughout the shaft cross-section, especially when sintering fine granulate fraction, being of greatest demand. It results in producing non-homogenous aggregates, and in creating sinters in case of firing ashes rich of coal.

These problems can be avoided by using a rotary furnace to fire and sinter granulates made of power station ashes. The positive movement of a material in a shaft furnace is favorable for uniform sintering whole granulated ash charges, while restraining sintered grains from creating agglomerates.

An essential feature of the known processes for sintering building aggregate in rotary furnaces is that aggregate is traditionally fired in the countercurrent and furnaces are fed with coal dust, gas or oil. These processes are energy-consuming and there are no reports about trials to use a rotary furnace to sinter power station ash granulates in a process taking the advantage from its own heat of combustion, mainly because of too large heat lost occurring in a rotary furnace.

Moreover, some power station ashes, worn out tires and sludge are also utilized in rotary furnaces while making cement. Trials are also made to co-fire sludge with different fuels, comprising hard and brown coal, in furnaces provided with a mechanical stoker, as well as in rotary furnaces while producing cement (in Cementownia Rejowiec). Trials were also conducted to thermally utilize municipal sludge in the process of producing gravelite in the factory at Mszczonów. Chimney gas has to be after-fired according to the process disclosed in the Polish patent specification No 165805 when firing in counter-current or the utilization of some waste materials, comprising e.g. halogen derivates, should be avoided as in the factory at Mszczonów. It arises from the fact that a charge comprising components being utilized moves from lower temperature values to higher ones and released flammable volatile components and toxic components are entrained by a flue gas stream often at temperature values lower than their flash-point and flows into a chimney without being completely burnt.

An essence of operating the furnace for producing light building aggregate according to the invention consists in firing and sintering granulated material consisted of power station ash and optionally fine slag fractions and/or coal waste material, as well as agglomeration promoting binders, including waste materials, in a rotary furnace, but in the system of co-current movements of particular phases. Energetic conditions of firing and sintering substantially change when said process is organized in this way, and results in conducting said process mainly with its own heat. They also enable to burn all volatile organic and inorganic substances which might be introduced to ashes together with binder, while agglomerating them, e.g. after-fermentation sludge from sewage treatment plants, paint shop wastes, refinery wastes and the like. A furnace has to be designed so that thermal losses are maximally eliminated and void areas in a furnace tube are possibly decreased, resulting in negligible costs of energy supplied from outside while said process is carried out.

Operating the furnace according to this invention, comprises grinding, homogenizing and agglomerating a charge material, drying it and treating it in a rotary furnace, cooling an obtained aggregate and product grading is characterized by that a blend is formed of power station ashes or power station ashes together with fine slug fractions (diameter up to 1 mm) and/or with coal wastes (also fraction of a diameter up to 1 mm) in a quantity from 60% to 95% by weight, when in the dry state, as well as of binder, including a waste one, e.g. sludge from a waste treatment plant, in a quantity from 40% to 5% by weight, when in the dry state, to obtain a possibly maximal contents of utilized waste materials, and to maintain this blend still pourable (final moisture contents below 21% by weight), said blend being homogenizable, e.g. in mixers with high speed mixing belts or mixing rotors, optionally in plough mixers provided with spinning blade heads.

A precisely homogenous blend composition is the condition of obtaining high mechanical strength of raw granulate grains, and that is especially important when waste materials having a great contents of volatile substances are used as a binder. The proposed precise homogenization resulting from operation of the furnace of the invention replaces mixing and agglomerating operations, as well as coating the obtained grains, additionally used in the known methods to increase the strength of the raw granulate. The such prepared blend is pressure agglomerated, e.g. on perforated rolls or without pressure on a granulating dish after adding a suitable quantity of make-up water.

Operating the furnace according to the invention is characterized in that on forming grains are dried and supplied into a rotary furnace operating with co-current where they are successively heated, conducted through a process of firing out coal from ashes and volatile substances from a binder in a reducing atmosphere, and then they are sintered in an oxidizing atmosphere, whereas carbon monoxide is after-fired in an air stream supplied directly into a sintering area. Because of the movement of the material inside the furnace in the same direction as a hot waste gas flow the granulate sintering area is longer than in the traditional counter-current solution, what results in increasing the aggregate quality and decreases the energy consumption in the furnace together with extending the duration of the contact between volatile organic substances and inorganic ones, emitted from the binder together with waste gases, what enables their total thermal destruction.

A furnace according to the invention has typical construction features required in a rotary arrangement: a drum consisting of a steel mantel lined inside with a fireproof ceramic lining, two furnace heads, also lined with fireproof material, a raw granulate charging unit and a sintered agglomerate receiver, a solid, liquid or gas fuel burner, a waste gas receiving channel, a channel supplying air into the furnace, as well as a chiller to recuperate the heat taken off together with the discharged aggregate.

The solution consists in that the furnace operates in the co-current system, so it is sloped in the opposite direction than in the traditional arrangements. The furnace head, closing the upper, wider part of the furnace drum, is provided with a duct supplying some air and with a fuel supplying duct terminated with a burner, said head being connected with a raw granulate storage bin and supplier. The head closing the lower, narrower part of the furnace drum, terminated with the pouring off device, is integrated with the aggregate receiver and the waste gas receiving channel, which can by for example used directly to dry the raw granulate. The pouring off device, that additionally accumulate the material, is terminated with a collar member provided with an opening.

Air supplied to the furnace is divided into two streams. Some air is conducted by a pipe into the firing area in the wider part of the furnace, and the rest is supplied by a pipe into the sintering area extending in the areas adjacent to the throat of the furnace drum not further than throughout the length of the wider part of the furnace and up to a quarter of its narrow part. The heat carried out by the hot aggregate discharged from the rotary furnace is taken off in the chiller and used, e.g. for feeding the furnace.

Heat losses should be possibly eliminated in order to obtain an approximately autothermal process. According to the proposed solution it is realized mainly by the better furnace drum insulation, as well as by substantially increasing a quantity of the filling material being fired in relation to quantities used in the traditional rotary furnaces and by limiting a quantity of supplied air to the minimum, that means also a quantity of heat carried out from the furnace together with flue gases. In connection to the above the rotary furnace comprises the double-diameter steel drum lined inside with a fireproof insulation and provided with fireproof lining, and insulated from outside with layer stable in a high temperature, especially with a rock wool insulation, so that a temperature at the furnace surface, when in operation, is not higher than 100-120°C. The ratio of the diameter of the wider furnace part to that of the narrow part has been substantially increased up to 1:0.67, whereas said ratio is in the known arrangements in the range from 1:0.9 to 1:0.77. The slope angle of the furnace axis has been increased advantageously to at least 3.6°, the value not used in the known arrangements. The end of the furnace tube has been provided with the discharge drum having the outlet with a collar which is constructed so as to additionally pile up the material in the end part of the furnace, but without choking the flue gases outlet to the chimney. The furnace heads and the air supplying ducts are also insulated especially carefully. A device used to supply raw granulate into the furnace is designed so as to minimize heat losses by convection, and the granulate level in the store bin is held so that hot gases are not able to flow out from the furnace head outwards. An aggregate receiver is designed so that it forms a hydraulic closure for chimney gases and the air cooling the aggregate in the chiller.

The air fed through the duct to the sintering area is introduced into the furnace through stub pipes spaced on its circumference in such a way that only those inlets are open which are covered with a granulate being sintered, said air being distributed in the sintering area by means of longitudinal slots made in the fireproof lining or by means of a manifold distributing air to the stub pipes spaced on the circumference of the furnace and along the sintering area also in such a way that air is introduced into the furnace through those openings which are actually covered with a sintered material. For example solutions described in Polish patent specifications No 137643 or 178823 can be used when implementing this method of metering air to the rotary furnace.

It results that air required to sinter aggregate flows through the aggregate layer and is much better used than air flowing along the furnace axis, while limiting a quantity of fuel gas escaping from the furnace. The total length of the furnace is substantially smaller than that used in the traditional arrangement in furnaces for dry baking clinker.

The method according to the invention will be explained in its exemplary embodiments.

### Example 1

A blend for making a granulate consists of dry ash from filters used in a power station and of fine dry slug fractions in the ratio of 2:1 by weight, as well as of sludge from a waste water treatment plant, said after-fermentation sludge comprising water in a quantity of 75% by mass. When setting a feed material comprising 48% by weight of ash, 24% of a slug fraction below 1 mm and 28% by weight of sludge a pourable blend is obtained having a moisture contents of 21%. This material is afterwards homogenized in a mixer, having a high speed rotary belt mixing element, and agglomerated by squeezing out in a press with perforated rolls. Then grains formed from said blend are dried and thermally treated in a rotary furnace operating in co-current.

Raw granulate grains are heated in said furnace and carbon from ashes and slugs, as well as volatile substances from binders are burned in a reducing atmosphere. Then the charge in the furnace is sintered in an oxidizing atmosphere, while introducing some air directly into the sintering area. Afterwards the obtained aggregate is cooled in the chiller.

### Example 2

A feed material is formed of power station ashes taken from a dump, said ashes having in its air-dry state a moisture contents of 10%, of after-flotation wastes having their grain size below 1 mm and a moisture contents of 30%, as well as of after-filtration sludge, having a moisture contents of 60%. When setting a feed material, comprising 72% by weight of ash, 10% by weight of after-flotation wastes and 18% by weight of sludge, a pourable blend is obtained having a moisture contents of 21%. This material is afterwards homogenized in a mixer, having a plough mixing element, and agglomerated on a granulating dish, and then thermally treated as in the example 1.

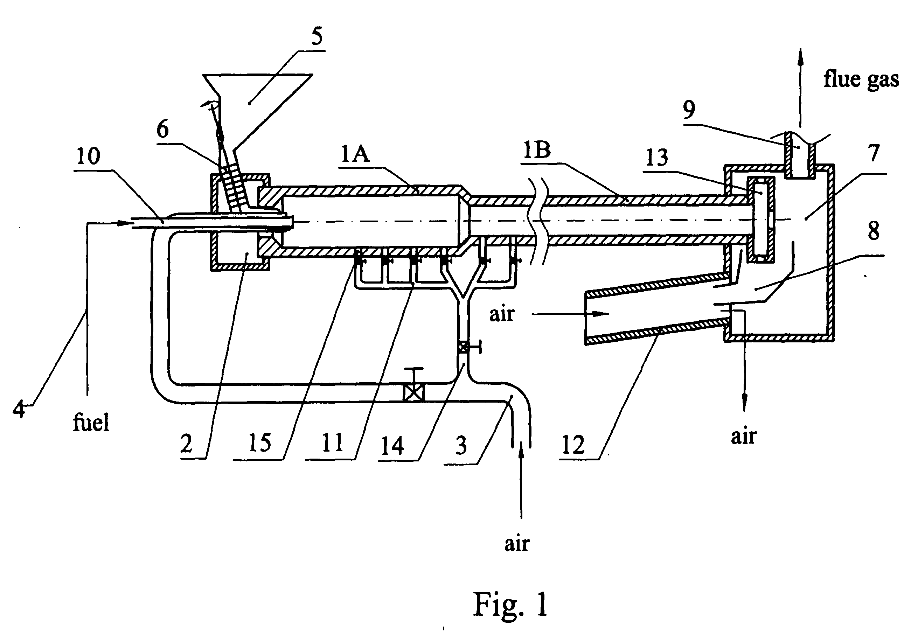

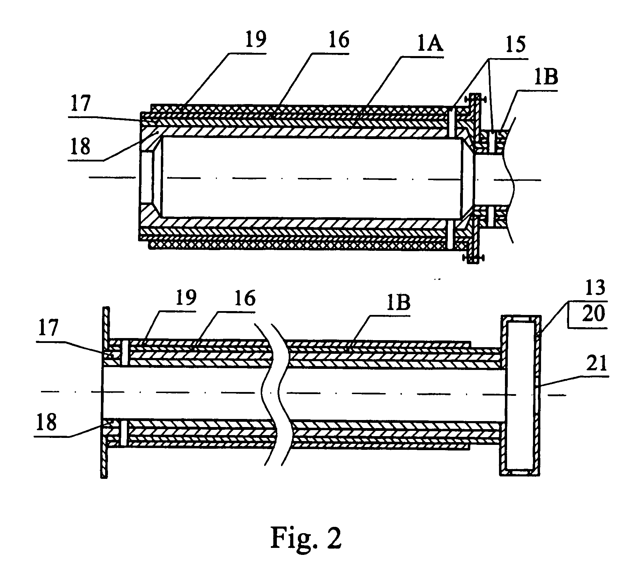

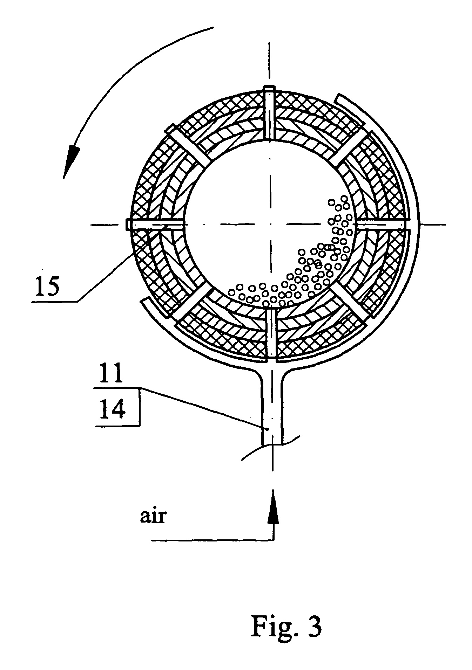

Figures show a rotary furnace according to the invention, i.e. fig.1 - General furnace overview, fig.2 - Axial section of wider and narrow furnace parts, fig.3 - Furnace cross-section.

A furnace has a double-diameter drum having a diameter ratio 1:0.67. The wider part 1A of the drum is connected to its narrow part 1B by means of a flange connection. An air pipe 3 is connected to the wider part 1A closed with a furnace head 2, said pipe being terminated with an outlet located in an end section of the wider drum part. A pipe 4 supplying fuel, especially heating oil, is terminated with a burner 10, located inside the air pipe 3. A container 5 and a granulated raw material supplier 6 are connected with the furnace head 2. The narrow part 1B of the furnace is closed with the head 7. An aggregate receiver 8 is located in the head 7. Flue gas from the head 7 flows through a flue gas duct 9 and is used for example to dry said granulated raw material. Air is supplied to the furnace by means of the pipe 3 into a firing area in the wider furnace part. A pipe 14, branched off from the air pipe 3, supplies air into the sintering area in the throat section of the furnace drum. The heat comprised in the hot aggregate falling down from the aggregate receiver 8 goes to a chilling assembly 12 and is supplied for example into the furnace together with an air stream flowing through the pipe 3. The narrow furnace part 1B is terminated with a pouring off device 13. The pipe 14 is terminated with a manifold the terminals 11 of which supply air through slots 15 into the furnace through the layer of granulated raw material. The pouring off device 13, that additionally piles up the material, is terminated with a collar member 20 having an opening 21. A steel furnace shell 16 for the wider part 1A, as well as for the narrow part 1B, is coated inside with an insulating fireproof chamotte layer 17 and with a fireproof lining 18, for example of andalusite, while the outer drum surface is insulated by means of an insulating material stable to high temperature, especially by means of rock wool 19 that makes it able to maintain temperature at the outer drum surface max. 120°C.

The furnace heads 2 and 7 as well as air pipes 3 and 14 are insulated with material stable to high temperature, especially with rock wool 19.

Some of air is directed by the pipe 3 into the firing area in the wider furnace part and the rest of air flows through the pipe 14 to the sintering area situated near the pipe throat, not further than along the whole wider furnace part 1A and up to a quarter of a length of the narrow furnace part 1B.

## Claims

1. A rotary furnace for firing and sintering light building aggregate, formed as a cylindrical container, sloped at a small angle in relation to the ground level, the steel mantel of said container being provided inside with a ceramic lining, a burner, a raw granulate charging unit and a container receiving the sintered aggregate, an air supply installation, and a flue gas discharging installation, **characterized in that** the charge and flue gas are in co-current arrangement and a double-diameter furnace drum (16) consists of a wider drum part (1A) and a narrow drum part (1b), said wider drum part being closed with a furnace head (2) to which an air duct (3) is connected, having its output in the wider drum part, whereas a fuel supplying duct (4) is terminated with the burner (10) mounted inside the duct (3), and a storage container (5), as well as a raw granulate feeder (6) are connected with the furnace head, said narrow drum part (1B), closed with a head (7), is connected to a flue gas receiving duct (9), and moreover one end of a chiller (12) is connected to the head (7) and a duct (14) runs outwards from said duct (3), said duct supplying air to a manifold (11) and then to slots (15) in a furnace wall, said slots being spaced on the circumference of the furnace in said granulate firing and sintering area adjacent to a furnace drum throat maximally throughout the length of the wider part (1A) of the furnace and up to a quarter of the length of the narrow part (1B) of said furnace.

2. A rotary furnace according to claim 1, **characterized in that** a slope angle between a furnace axis and the ground level is advantageously greater than 3.6°.

3. A rotary furnace according to claim 1, **characterized in that** a ratio of an outside diameter of the wider drum part (1A) to that of the narrow part (1B) is in the range 1 : max. 0.77, advantageously 1:0.67.

4. A rotary furnace according to claim 1, **characterized in that** a steel mantel (16) of the drum in its wider and narrow parts is coated inside with a fireproof insulation (17) and with a fireproof lining (18), and outside it is lined with an insulation stable to a high temperature.

5. A rotary furnace according to claim 1, **characterized in that** a discharging device (13) is terminated with a collar (20) provided with an opening (21).

6. A rotary furnace according to claim 1, **characterized in that** furnace heads (2) and (7) as well as air ducts (3) and (14) are insulated with an insulation stable to a high temperature, especially with rock wool (19).

## Patentansprüche

1. Der Drehofen zu Ausbrennen und Sinter des leichten Zuschlags, der ein bisschen schräg Walzengefäß ist, dessen Stahlmantel Innen mit der Keramikmauer ausgelegt ist und der einen Brenner, ein Aufschüttenssystem des Rohgranulats und ein Abnahmegerät von dem gesintem Zuschlag sowie eine Luftzufuhrinstallation und Brenngasabfuhrinstallation hat, in dem es ein Mitstromsystem von Rohstoff und Brenngasen gibt und die Doppeldurchmessertrommel des Ofens (16) besteht aus einem dickeren Trommelteil (1A) und einem dünneren Trommelteil (1B) und der dickere Trommelteil ist mit dem Ofenkopf (2) geschlossen, zu dem ist eine Luftleitung geführt wird (3), derer Auslauf sich in dem dickeren Trommelteil befindet, indem die Kraftstoffzufuhrleitung mit einem Brenner endet (10), der sich in der Leitung befindet (3) und mit dem Ofenkopf (2) ist ein Speicher (5) und ein Zuführer (6) von Rohgranulat und der dünnerer Trommelteil (1B), der mit dem Kopf geschlossen wird (7) ist mit einem Brenngasannahmekanal (9) verbunden und zu dem Kopf (7) ist eine Kühlraumendung (12) angeschlossen und von der Leitung (3) kommt eine Luftzuführleitung zu de Kollektor (11) und dann zu den Spalten (15) in den Ofenwänden, die sich auf seinem Umfang an den Stellen des Granulatbrennens und - sinters befinden, indem sich diese Zone in den Bereichen, die an der Einziehung der Ofentrommel auf der ganzen Länge des dickeren Ofenteils (1A) und zu ¼ seinem dünneren Teil (1B) liegen, befinden.

2. Der Drehofen mit dem Anspruch 1, indem die Ablenkungswinkel der Ofenachse von der Ebene größer als 3,6° ist.

3. Der Drehofen mit dem Anspruch 1 , indem sich das Verhältnis von den Innendurchschnitten des dickeren Trommelteils (1A) und des dünneren Teils (1B) in den Grenzen 1: max. 0,77 und günstig 1: 0,67 befindet.

4. Der Drehofen mit dem Anspruch 1, indem der Stahlmantel der Trommel (16), seines dickeren und dünneren Teils in Innen mit einer feuerfeste Dämmerung (17) und einer feuerfesten Mauer (18) beschichtet ist und im Außen mit einer gegen die hohe Temperatur festen Dämmerung beschichtet ist (19).

5. Der Drehofen mit dem Anspruch 1, indem die Auskippanlage (13) mit einem Flansch, in dem sich eine Öffnung befindet, endet.

6. Der Drehofen mit dem Anspruch 1, indem die Ofenköpfe (2) und (7) sowie die Luftleitungen (3) und (14) mit einer gegen die hohe Temperatur festen Dämmerung, vor allem mit Mineralwolle (19), isoliert sind.

## Revendications

1. Le four rotatif pour le brûlage et pour le frittage de l'agrégat léger a la forme d'un bac cylindrique dévié légèrement du niveau. À l'intérieur, son armure en acier est revêtue avec un revêtement maçonné. Il est pourvu en un brûleur, en un groupe de chargement du granulé brut, en un récepteur de l'agrégat fritté, en une installation d'alimentation d'air, en une installation d'évacuation des fumées. Le four se distingue par le système équicourant du chargement et des fumées. Le tambour du four avec deux diamètres (16) se compose d'une partie du tambour plus grosse (1A) et d'une partie du tambour plus fine (1B). La partie du tambour plus grosse se ferme avec la tête du four (2) où est branché le tuyau de l'air (3) dont la sortie se trouve dans la partie du four plus grosse. En revanche, la conduite de l'alimentation de carburant (4) possède à son extrémité un brûleur (10) qui se trouve à l'intérieur de la conduite (3). La tête du four (2) est raccordée avec un accumulateur (5) et avec un dispositif d'alimentation (6) du granulé brut. La partie du tambour plus fine (1B), qui se ferme avec une tête (7), est raccordée avec le canal des fumées (9). En plus, à la tête (7) est raccordée une extrémité du frigoriste (12) et de la conduite (3) part la conduite (14) qui alimente en air le collecteur (11) et les fissures (15) dans les parois du four distribuées sur son périmètre et situées dans l'endroit où on effectue le brûlage et le frittage du granulé - cette zone est contiguë au rétrécissement du tambour du four, elle s'étend au maximum sur toute la longueur de la partie plus grosse du four (1A) et jusqu'à un quart de la longueur de sa partie plus fine (1B).

2. Le four rotatif conforme à la revendication n° 1 se distingue parce que l'angle de déviation de l'axe du four du niveau est plus grand de l'angle 3,6° d'une manière positive.

3. Le four rotatif conforme à la revendication n° 1 se distingue parce que le rapport des diamètres extérieurs de la partie du tambour plus grosse (1A) et de celle plus fine (1B) sont dans les limites 1 : max. 0,77, tandis que la situation favorable est 1 : 0,67.

4. Le four rotatif conforme à la revendication n° 1 se distingue parce que l'enveloppe en acier du tambour (16), soit de sa partie plus grosse soit de celle plus fine, est revêtue à l'intérieur d'une isolation réfractaire (17) et d'un revêtement maçonné réfractaire (18), tandis qu'à l'extérieur elle est revêtue d'une isolation thermique (19) résistante aux températures élevées.

5. Le four rotatif conforme à la revendication n° 1 se distingue parce que le dispositif de vidage (13) est terminé par une bride (20) pourvue d'un orifice (21).

6. Le four rotatif conforme à la revendication n° 1 se distingue parce que les têtes du four (2) et (7), ainsi que les conduites d'air (3) et (14) possèdent une isolation résistante aux températures élevées, et en particulier une isolation en laine minérale (19).
